Europäisches Patentamt

European Patent Office

Office européen des brevets

(11) Veröffentlichungsnummer: **0 273 419**
**A1**

## EUROPÄISCHE PATENTANMELDUNG

(21) Anmeldenummer: **87119239.9**

(51) Int. Cl.⁴: **G01B 17/02**

(22) Anmeldetag: **26.12.87**

(30) Priorität: **03.01.87 DE 3700086**

(43) Veröffentlichungstag der Anmeldung:
**06.07.88 Patentblatt 88/27**

(84) Benannte Vertragsstaaten:
**DE FR GB IT SE**

(71) Anmelder: **Nukem GmbH**
**Rodenbacher Chaussee 6 Postfach 11 00 80**
**D-6450 Hanau 11(DE)**

(72) Erfinder: **Quittkat, Jörg**
**Oberissigheimer Strasse 14**
**D-6451 Neuberg 1(DE)**
Erfinder: **Bender, Rudolf**
**Licher Pforte 3**
**D-6302 Lich-Langsdorf(DE)**

(74) Vertreter: **Stoffregen, Hans-Herbert, Dr.**
**Dipl.-Phys. et al**
**Patentanwälte Strasse & Stoffregen**
**Salzstrasse 11a Postfach 2144**
**D-6450 Hanau/Main 1(DE)**

(54) **Verfahren zum Messen der Wanddicke eines Werkstücks mittels Ultraschall.**

(57)    1. Verfahren zum Messen der Wanddicke eines Werkstücks mittels Ultraschall.

2.1 Zum Messen der Wanddicke ist es erforderlich, die Zeitdauer zwischen dem bei der Einschaltung auftretenden Oberflächenecho und dem Rückwandecho zu messen, was auf digitale Weise durch Abzählen hochfrequenter Zählimpulse erfolgt, die zwischen diesen Echos auftreten. Um eine hohe Auflösung dieser Messung zu erhalten, ist eine sehr hohe Zählimpulsfrequenz erforderlich. Es soll eine Messung hoher Auflösung bei geringer Frequenz über einen großen Wanddickenbereich möglich sein.

2.2 Ein Sägezahngenerator (3) erzeugt bei Auftreten des Oberflächenechos eine Folge von Sägezähnen, die jeweils einen Zählimpuls bewirken. Bei Auftreten des Rückwandechos wird der augenblickliche Amplitudenwert des Sägezahns und in einem Zähler (5) die Anzahl der Zählimpulse erfaßt, wobei jeder Zählimpuls eine konstante Wanddickeneinheit und der Amplitudenwert einen Bruchteil davon definieren.

Fig. 1

## Verfahren zum Messen der Wanddicke eines Werkstücks mittels Ultraschall

Die Erfindung betrifft ein Verfahren zum Messen der Wanddicke eines Werkstücks mittels Ultraschall, bei dem das Oberflächenecho einer Ultraschallwelle einen Startimpuls und das Rückwandecho einen Stopimpuls für einen Sägezahngenerator bewirkt und die Amplitude eines Sägezahns bei Auftreten des Stoppimpulses ein Maß für die Wanddicke darstellt.

Zum Messen der Wanddicke eines Werkstücks mittels Ultraschall wird das bei senkrechter Einschallung von Ultraschallwellen entstehende Oberflächenecho sowie das Rückwandecho erfaßt und die Laufzeit zwischen den beiden Echos gemessen. Diese Laufzeit ist ein Maß für die Dicke des Werkstückes. Die gemessenen Echos bewirken in der Auswerteschaltung entsprechende Triggersignale.

Die Laufzeit wird nach zwei Verfahren gemessen. Bei einem ersten, analogen Verfahren, wie es aus der US-PS 34 27 866 bekannt ist, startet das Triggersignal, das vom Oberflächenecho bewirkt wird, einen Sägezahngenerator, der ein von Null linear anwachsendes Signal erzeugt. Bei Auftreten des zweiten Triggersignals, das vom Rückwandecho bewirkt wird, wird die Augenblicksamplitude des Signals des Sägezahngenerators gemessen. Dieses Analogverfahren weist den Nachteil auf, daß, wenn eine hohe Auflösung der Laufzeitmessung gewünscht wird, die Anstiegsflanke des Sägezahns eine große Steilheit aufweisen muß. Hierdurch wird jedoch der Gesamtmeßbereich stark eingeschränkt.

Beim zweiten, digitalen Auswerteverfahren werden hochfrequente Zählimpulse gemessen, welche zwischen den beiden Triggersignalen auftreten. Wird hier eine hohe Auflösung der Laufzeitmessung gefordert, dann müssen die Zählimpulse eine sehr hohe Frequenz aufweisen. Um beispielsweise bei Stahl eine Auflösung von 1 micron zu erhalten, müssen die Zählimpulse eine Frequenz von eta 3 GHz aufweisen. Diese hohen Frequenzen sind nur mit großem schaltungstechnischen Aufwand beherrschbar.

Die DE-OS 31 26 138 beschreibt ein solches digitales Auswerteverfahren, bei dem jedoch zur Erhöhung der Auflösung bei verminderter Zählfrequenz nach jedem zweiten Triggersignal die Zählimpulse um einen vorgegebenen Phasenwinkel verschoben werden. Über eine vorgegebene Anzahl von Meßzyklen wird die zwischen den beiden Triggersignalen auftretende Anzahl der Zählimpulse gezählt und sodann die Anzahl der Zählimpulse durch die Anzahl der Meßzyklen zur Bestimmung der Wanddicke dividiert.

Bei dem Verfahren nach der DE-OS 34 29 409 wird die beim Auftreten des zweiten Triggerimpulses als Bruchteil eines Zählimpulses verbleibende Restzeit erfaßt. Diese Restzeit wird dann nach dem Nenius-Prinzip durch Verstimmen eines Oszillators ebenfalls ausgezählt.

Es besteht die Aufgabe, das Verfahren so auszubilden, daß die Wanddicke über einen sehr großen Wanddickenbereich mit hoher Auflösung gemessen werden kann.

Die Aufgabe wird erfindungsgemäß dadurch gelöst, daß der Sägezahngenerator eine Folge von zueinander gleichen dreiecksförmigen Sägezähnen erzeugt, an den Umkehrpunkten des Signalverlaufs der Sägezähne jeweils ein Zählimpuls erzeugt wird und in einem Summierer die Anzahl der bis zum Auftreten des Stoppimpulses erzeugten Zählimpulse und die bei Auftreten des Stoppimpulses vorhandene Amplitude eines Sägezahns erfaßt werden, wobei jeder Zählimpuls eine konstante Wanddickeneinheit und die Amplitude einen Bruchteil dieser Wanddickeneinheit definieren.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von in der Zeichnung dargestellten bevorzugten Ausführungsbeispielen.

Es zeigen:

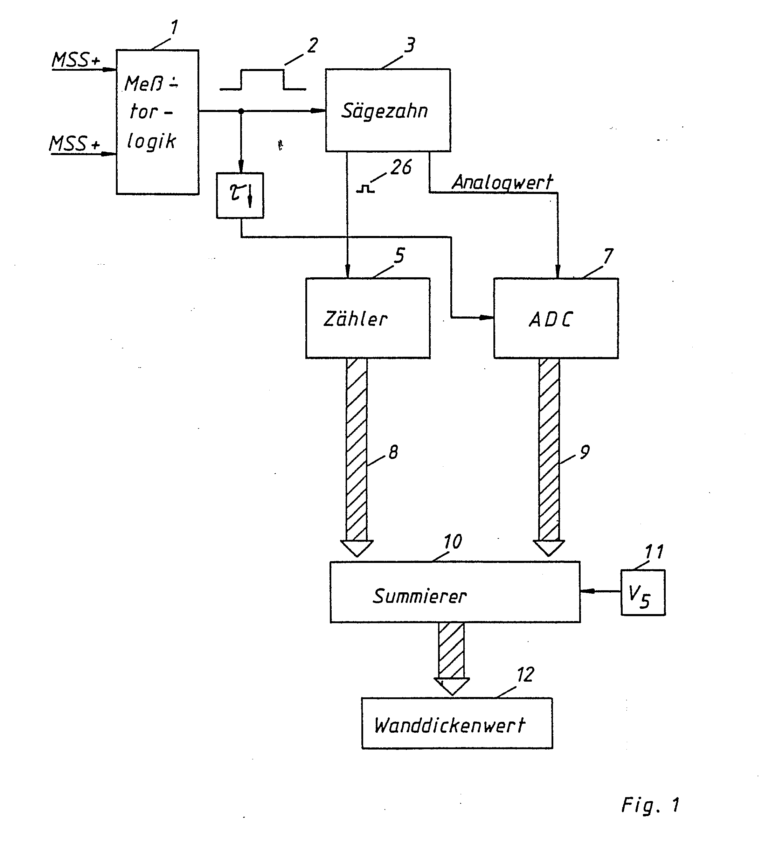

Fig. 1 Ein Ausführungsbeispiel einer Schaltungsanordnung zum Ausführen des Verfahrens und

Fig. 2 bei der Ausführung der Messung auftretende Kurvenverläufe.

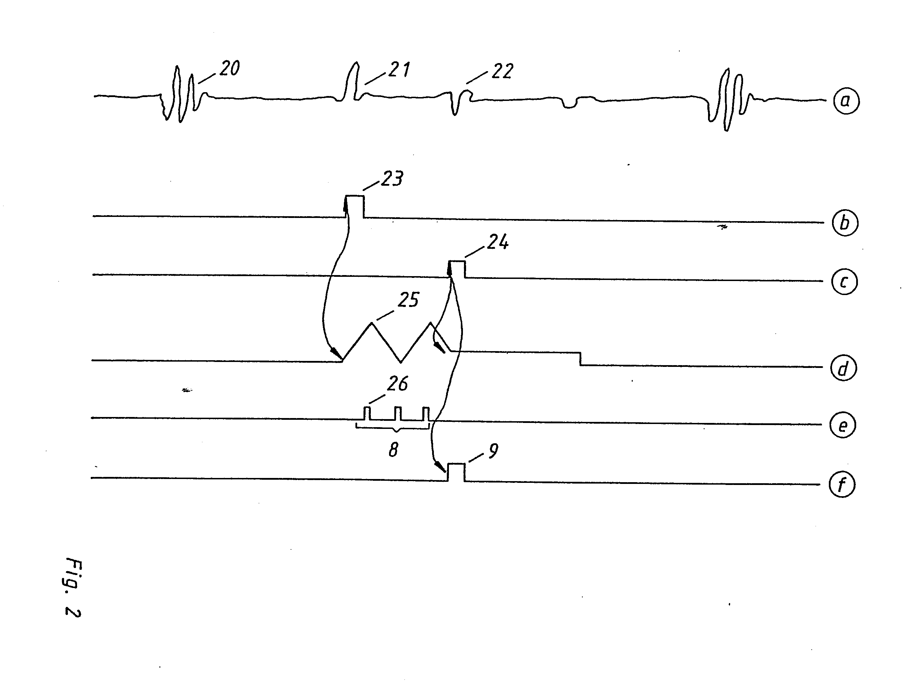

Wird ein Ultraschallsignal (20) durch einen Messkopf erzeugt, dann wird dieses Signal an der Oberfläche des Werkstücks reflektiert, wodurch ein Oberflächenecho (21) erzeugt wird. Die in das Werkstück eindringenden Ultraschallwellen werden an der gegenüberliegenden Rückwand des Werkstücks reflektiert und somit als Rückwandecho (22) vom Messkopf empfangen. Diese Verhältnisse sind in Fig. 2a widergegeben. Das Oberflächenecho (21) und das Rückwandecho (22) werden dem Eingang einer Messtorlogikschaltung (1) zugeführt. Das Oberflächenecho (21) bewirkt dort einen Triggerimpuls (23) gemäß Fig. 2b, während das Rückwandecho (22) einen zweiten Triggerimpuls (24) gemäß Fig. 2c bewirkt. Das Maß für die gemessene Wandstärke ist der zeitliche Abstand zwischen den Anstiegsflanken der beiden rechteckigen Triggerimpulse (23) und (24). Diese beiden Anstiegsflanken bestimmen Anfang und ende des Ausgangssignals (2) der Meßtorlogikschaltung. Dieses Ausgangssignal (2) stellt das sogenannte Meßtor dar.

Es wird einem Sägezahngenerator (3) zugeführt. Dieser Sägezahngenerator (3) erzeugt eine Folge von frequenzstabilen Sägezähnen (25), die gemäß Fig. 2d symmetrische Anstiegs-und Abfallflanken aufweisen. Der Sägezahngenerator (3) wird gestartet beim Auftreten der Anstiegsflanke des Signals (2). eine Triggerschaltung im Sägezahngenerator (3) erzeugt bei jedem Richtungswechsel der Sägezähne (25) einen Zählimpuls (26). Diese Zählimpulse (26) werden vom Sägezahngenerator einem Zähler (5) zugeführt.

Beim Auftreten der Abfallflanke des rechteckigen Ausgangssignals (2), entsprechend dem Auftreten der Anstiegsflanke des Triggersignals (24) wird der augenblickliche Analogwert des Sägezahnsignals erfaßt. Tritt die Abstiegsflanke des Ausgangssignals (2) bei einer Anstiegsflanke eines Sägezahns (25) auf, dann wird dieser Amplitudenwert direkt einem Analog-Digitalkonverter (7) zugeführt. Tritt dagegen die Abfallflanke des Signals (2) bei einer Abfallflanke eines Sägezahns (25) auf, dann wird dem Konverter (7) ein Wert zugeführt, der gleich der Maximalamplitude der Sägezähne (25) abzüglich des augenblicklichen Amplitudenwertes ist. Es wird also in diesem Fall der Ergänzungswert dem Konverter (7) zugeführt. Mit dem Auftreten der Abfallflanke des Signals (2) wird der Sägezahngenerator (3) gestoppt. Der Zählerinhalt des Zählers (5) wird in einen Summierer (10) eingegeben.

Weiterhin wird der vorerwähnte Analogwert (9), der vom Sägezahngenerator (3) dem Konverter (7) zugeführt wurde, in einen Digitalwert und dem Summierer (10) zugeführt.

Der Summierer (10) gewichtet die ihm zugeführten Digitalsignale wie folgt:

Jeder Zählimpuls (26) entspricht einer Wanddickeneinheit E während der Analogwert (9) einem Teil dieser Wanddickeneinheit E entspricht. Je größer das Analogsignal (9) ist, umso größer ist dieser Anteil. Im Ausführungsbeispiel nach Fig. 2 treten drei Zählimpulse (26) auf, so daß dies einer Wanddicke von drei Wanddickeneinheiten E entspricht. Das Analogsignal (9) entspricht beispielsweise einem Wert von 0,8 E, womit die Wanddicke zu 3,8 E gemessen wurde. Durchlaufen die Schallwellen zwischen dem Auftreten von zwei Zählimpulsen (26) ein Werkstück 2mm, dann beträgt die Wanddickeneinheit E = 2mm. Dies bedeutet, daß gemäß dem vorerwähnten Beispiel eine Wanddicke von 7,6mm gemessen wird.

Die vom Summierer (10) gebildete Summe wird mir dem von der Schallgeschwindigkeit bestimmten Faktor (11), also mit der Wanddickeneinheit multipliziert und der so errechnete Wanddickenwert in einer Ausgabevorrichtung (12) in Millimeter zur Ausgabe gebracht.

Weder an den Analogteil noch an den Digitalteil der Schaltungsanordnung werden besondere Anforderungen gestellt, gleichwohl eine hohe Auflösung des Meßwerts erreicht.

Der Sägezahngenerator (3) kann auch eine Folge von Sägezähnen erzeugen, die eine geneigte Anstiegsflanke und eine senkrechte Abfallflanke aufweisen. Die Zählimpulse (26) werden jeweils bei Auftreten der senkrechten Abfallflanke erzeugt. In diesem Fall ist es nicht erforderlich, daß der Sägezahngenerator (3) dem Konverter (7) einen Ergänzungswert zuführt. Vielmehr wird stets der augenblickliche Amplitudenwert dem Konverter (7) zugeführt, den ein Sägezahn bei Auftreten der Abfallflanke des Signals (2) aufweist.

Das Verfahren ist in gleicher Weise anwendbar, wenn die Wanddicke als Laufzeit zwischen z.B. zwei Rückwandechos erfaßt wird.

## Ansprüche

1. Verfahren zum Messen der Wanddicke eines Werkstücks mittels Ultraschall, bei dem das Oberflächenecho einer Ultraschallwelle einen Startimpuls und das Rückwandecho einen Stoppimpuls für einen Sägezahngenerator bewirkt und die Amplitude eines Sägezahns bei Auftreten des Stoppimpulses ein Maß für die Wanddicke darstellt, dadurch **gekennzeichnet,** daß der Sägezahngenerator (3) eine Folge von zueinander gleichen dreiecksförmigen Sägezähnen (25) erzeugt, an den Umkehrpunkten des Signalverlaufs der Sägezähne (25) jeweils ein Zählimpuls (26) erzeugt wird und in einem Summierer die bis zum Auftreten des Stoppimpulses erzeugten Zählimpulse (26) und die bei Auftreten des Stoppimpulses vorhandene Amplitude (9) eines Sägezahns (25) erfaßt werden, wobei jeder Zählimpuls (26) eine konstante Wanddickeneinheit und die Amplitude (9) einen Bruchteil dieser Wanddickeneinheit definieren.

2. Verfahren nach Anspruch 1, dadurch **gekennzeichnet,** daß die Sägezähne (25) symmetrisch zueinander verlaufende Anstiegs-und Abfallflanken aufweisen.

3. Verfahren nach Anspruch 1, dadurch **gekennzeichnet,** daß die Sägezähne (25) senkrechte Abfallflanken aufweisen und bei jeder Abfallflanke ein Zählimpuls (26) erzeugt wird.

4. Verfahren nach einem der Ansprüche 1 bis 3, dadurch **gekennzeichnet,** daß im Summierer (10) die Anzahl (8) der Zählimpulse (26) und die digitalisierte Amplitude (9) als Summenwert mit einem von der Schallgeschwindigkeit bestimmten Faktor (11) mulipliziert wird.

5. Verfahren nach Anspruch 2, dadurch **gekennzeichnet,** daß bei einer Anstiegsflanke der Amplitudenwert direkt und bei einer Abfallflanke der Ergänzungswert des Amplitudenwerts zur Maximalamplitude der Sägezähne dem Summierer zugeführt werden;

6. Schaltungsanordnung zur Durchführung des Verfahrens nach einem der Ansprüche 1 bis 5, dadurch **gekennzeichnet,** daß mit dem Sägezahngenerator (3) ein Zähler (5) und Analog-Digitalkonverter (7) verbunden ist, die ihrerseits mit dem Summierer (10) verbunden sind, dem Zähler (5) die zwischen dem Auftreten-und Stoppimpulse (23, 24) erzeugten Zählimpulse (26) und dem Konverter (7) der beim Auftreten des Stoppimpulses (24) vorhandene Amplitudenwert (9) zugeführt werden, und der Summierer (10) die Summe der von Zähler gezählten Impulse (26) und der vom Konverter (7) zugeführten Impulse bildet;

7. Schaltungsanordnung nach Anspruch 6, dadurch **gekennzeichnet,** daß die Zählimpulse (26) von einer Triggerschaltung des Sägezahngenerators (3) erzeugt werden;

8. Schaltungsanordnung nach Anspruch 6 oder 7, dadurch **gekennzeichnet,** daß der Summierer (10) einen Multiplizierer umfaßt, der die Summe mit Faktor (11) der Wanddickeneinheit multipliziert und das Produkt zur Ausgabe bringt.

*Fig. 1*

Fig. 2

## EINSCHLÄGIGE DOKUMENTE

EP 87119239.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| D,A | US - A - 3 427 866 (WEIGHART) <br> * Gesamt * <br><br> -- | 1 | G 01 B 17/02 |
| A | DE - B - 1 015 613 (SPERRY) <br> * Gesamt * <br><br> ---- | 1 | |

| RECHERCHIERTE SACHGEBIETE (Int. Cl. 4) |
|---|
| G 01 B 17/00 <br> G 01 N 29/00 |

Der vorliegende Recherchenbericht wurde für alle Patentansprüche erstellt.

| Recherchenort | Abschlußdatum der Recherche | Prüfer |
|---|---|---|
| WIEN | 25-03-1988 | TOMASELLI |